# EUROPEAN PATENT SPECIFICATION

(11) **EP 4 256 363 B1**
(45) Date of publication and mention of the grant of the patent: **11.11.2026**
(21) Application number: 21900237.5
(22) Date of filing: 29.11.2021
(51) Int. Cl.: G01C 21/20, G01S 5/16, G01S 5/18

(54) **SYSTEM AND METHOD FOR DETERMINING AN INSTANTANEOUS ABSOLUTE POSITION AND ORIENTATION OF AN ENTITY IN A NAVIGATION SPACE**
SYSTEM UND VERFAHREN ZUR BESTIMMUNG EINER MOMENTANEN ABSOLUTEN POSITION UND AUSRICHTUNG EINER ENTITÄT IN EINEM NAVIGATIONSRAUM
SYSTÈME ET PROCÉDÉ DE DÉTERMINATION DE POSITION ET D'ORIENTATION ABSOLUES INSTANTANÉES D'UNE ENTITÉ DANS UN ESPACE DE NAVIGATION

(30) Priority: 01.12.2020 IN 202041052367
(43) Date of publication of application: 11.10.2023
(73) Proprietor: Hachidori Robotics Private Limited, Bangalore 560076 (IN)
(72) Inventor: VENKATARAMAN, Ramanathan, Bangalore 560076 (IN); ANNAM, Janakiram, Bangalore 560092 (IN)
(74) Representative: Hellmich, Wolfgang
(86) International application number: PCT/IN2021/051116
(87) International publication number: WO 2022/118338

(56) References cited:
- EP-A2- 2 594 899
- WO-A1-2019/176842
- TW-A- 201 116 805
- US-A1- 2012 271 540
- US-A1- 2014 379 164

## Description

### BACKGROUND

### Technical Field

The embodiments of the present invention are generally related to a position sensing and navigation system in particular for moving objects in particular for determining an instantaneous absolute position and orientation, referred subsequently as refined absolute position and refined absolute orientation respectively in the document, of an entity such as robot (BOT) in a navigation space.

### Description of the Related Art

Pursuant to an exemplary scenario, determining the position and rotational orientation of an object within a defined space is a practical problem that has brought about many solutions, each dedicated toward solving the specific requirements of an application. Several existing techniques for determining position or orientation of objects (stationary or mobile) within a given space include for example optical, ultrasonic, or radio-based techniques. For example, several existing techniques employ a Global Positioning System (GPS) for position determination, but it lacks orientation determination capability for stationary objects and also GPS operability suffers indoors from signal attenuation and reflections, and accordingly is not a good choice for indoor applications. Magnetometers provide absolute orientation but are highly susceptible to dynamically changing magnetic field near the sensor. While they may work well in controlled scenario, for load carrying applications the magnetic nature of the load could make the readings unreliable. Ultrasonic methods operate well indoors but lack orientation determination. Additionally, the existing techniques such as the laser-based techniques (Lidar) offer both position and orientation but at a huge cost. Moreover, existing techniques that use position data associated with loosely fixed objects on the floor like furniture, machinery and the like as reference points are highly vulnerable to dynamically changing scenario on the floor.

Moreover, while navigating through narrow passages, it is critical to maintain the entity close to a pre-defined path (e.g. middle line of the passage) so as to avoid any collision or false interpretation of fixed structures like wall as obstructions. In order to keep the entity in the ideal path, a current position and deviation from the ideal path of the entity needs to be accurately known with a desirable error of less than for example, 10 centimeters.

US 2012/0271540 A1 teaches a system and method for vehicle navigation and piloting using absolute and relative coordinates. The system and method are usable in an environment that uses vehicle navigation, combining both absolute and relative coordinates. Each vehicle is equipped with a navigation device, which, in turn, includes an absolute location determination device such as a GPS receiver to determine an absolute (initial) position. In addition, additional sensors, such as a camera, laser scanner, or radar, are also installed in the vehicle. The system also includes a digital map or database that stores information/records indicative of at least some of a vehicle's surrounding objects. The stored information/records typically include(s) relative positional attributes with respect to a reference axis. Physical objects surrounding a vehicle have an accurate relative measurement with respect to one another. Typically, such an accurate relative measurement is achieved by placing the physical objects accurately on a common relative coordinate system, i.e., by giving them relative coordinates from a common system. The information corresponding to the relative coordinates of physical objects is stored in the digital map and is subsequently retrieved when a vehicle comprising the system starts moving. Furthermore as the vehicle moves, typically on the street and in a particular direction, the sensors sense the presence of some of the surrounding objects and measure the vehicle's relative distance to each of the surrounding objects. The information about the relative distance between the vehicle and the surrounding objects is used to determine the vehicle's instantaneous lateral offset relative to the reference axis. Each sensor installed on the vehicle is configured to detect a common object, for example, a sign post. Each vehicle subsequently uses "object-based map matching" to match the sign post using absolute position determinations both on board the vehicle and within the digital map. The estimated position and characteristics of physical objects sensed by the vehicle are matched against one or more physical objects and their characteristics represented in the map. In this manner unambiguous matching is envisaged and vehicles are enabled to compute a more accurate relative position - within centimeters - with respect to physical objects surrounding the vehicle. Further a common map object identification scheme is envisaged in which radio frequency identification (RFID) tags installed on physical objects are sensed by vehicles to minimize the error involved in identifying a common object.

Hence there is a need for a cost-effective alternate method and system
for determining absolute position and orientation of an entity while providing good accuracy along with an elimination of any dependency on a dynamically changing scenario in the navigation space except planned changes such as a change in the navigation path, modifying the layout like breaking a wall and the like. Further there is a need for a system and method to find an absolute position of an entity (hereafter called BOT), stationary or moving, in a 2D coordinate system (say, Cartesian) using a diversified set of data captured from different sourcing devices along with an assistance of a guiding entity (e.g. unique map) that provides the required guidance on the usage of the diversified set of data dynamically to arrive at a required absolute position accurately for a given navigation segment.

The object of the present invention is to provide a system and a method to determine a refined absolute position and refined absolute orientation of an entity in a navigation space in a cost-effective manner along with good accuracy while eliminating any dependency on any dynamically changing scenario or unplanned changes in the navigation space.

This object is achieved by the subject matter of the independent claims.

Preferred embodiments are mirrored by the dependent claims.

With no reference to historical data, quality of the absolute position remains the same and does not degrade during any interval of time due to dependency on recency of old data.

A refined absolute position and refined absolute orientation of an entity in a navigation space is determined based on extraction of diversified features in the navigation space using diversified sensors used to seamlessly help improve accuracy of absolute position and orientation including on-the-fly switchovers.

A refined absolute position and refined absolute orientation of an entity in a navigation space is determined that achieves accurate absolute position using coarse absolute position and a unique combination of relative positions extracted from diversified sensors using specific features in the navigation space.

A refined absolute position and refined absolute orientation of an entity in a navigation space is determined using a seamless switch-over between sensors during navigation based on the context as supported by a unique navigation map.

The various embodiments herein provide a system and to determine an absolute position and absolute orientation of an entity in a navigation space in a cost-effective manner along with good accuracy while eliminating any dependency on any dynamically changing scenario or unplanned changes in the navigation space. With no reference to historical data, quality of the absolute position remains the same and does not degrade during any interval of time due to dependency on recency of old data.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not of limitation. Many changes and modifications may be made within the scope of the invention as defined by the appended claims.

### BRIEF DESCRIPTION OF THE DRAWINGS

The embodiments of the present invention will be better understood from the following detailed description with reference to the drawings, in which:
**FIG.1** illustrates a block diagram of a system for determining a position and an orientation of an entity in a navigation space, according to an embodiment herein.
**FIG. 2A** illustrates a perspective view of an entity (robot) fitted with a system provided for determining a position and an orientation of an entity in a navigation space and fixed with a first set of sensors at the first plurality of locations on the entity, according to one embodiment herein.
**FIG.2B** illustrates a plan view of positioning of the first set of sensors at the first plurality of locations on the entity fixed with a system provided for determining a coarse absolute position and a coarse absolute orientation of an entity in a navigation space, according to one embodiment herein.
**FIG. 3A** illustrates a perspective view of an entity (robot) fitted with a system provided for determining a position and an orientation of an entity in a navigation space and fixed with a second set of sensors at the second plurality of locations on an example entity, according to one embodiment herein.
**FIG.3B** illustrates a process of determining a deviation of the entity from a predetermined path during navigation in the navigation space derived by the relative position and orientation unit using the diversified set of sensors among the second set of sensors, according to one embodiment herein.
**FIG. 3C** illustrates a perspective view of an entity (robot) fitted with a system provided for determining a position and an orientation of an entity in a navigation space and fixed with a second set of sensors at the second plurality of locations on an example entity, and illustrates a determining of the relative position and relative orientation of the entity with respect to a pair of lane markings, according to one embodiment herein.

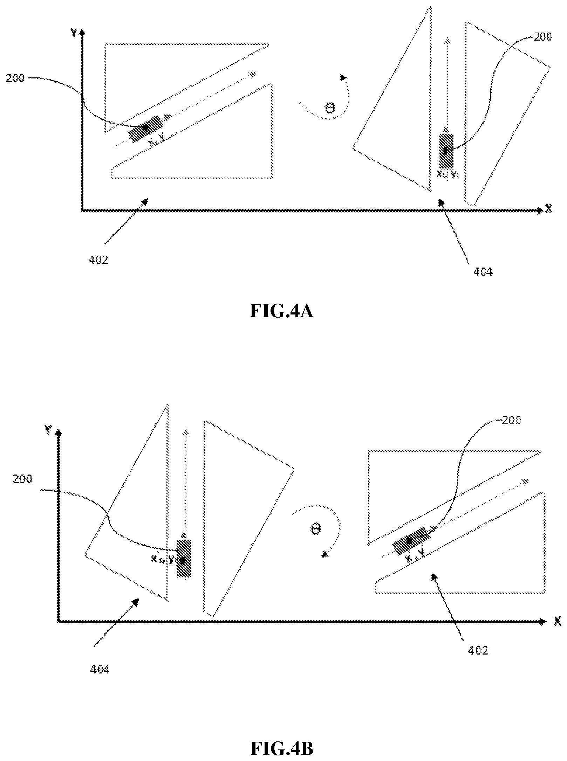

**FIGS. 4A-4B** illustrates a transformation of a navigation plane to align the predetermined path with Y-axis always using an analytics unit configured to transform the predetermined path by rotating a plane associated with the predetermined path by a known rotation angle so as to align the predetermined path parallel to one of X-axis or Y-axis of the two-dimensional cartesian plane to generate a transformed navigation plane, and for applying a refinement based on the relative position and the relative orientation in a system for determining a refined absolute position and a refined absolute orientation of an entity in a navigation space, according to one embodiment herein.
**FIG.5** is a flow chart explaining a process of navigating an entity along a predetermined path in a navigation space, using the system for determining a refined absolute position and a refined absolute orientation of an entity in a navigation space, according to one embodiment herein.
**FIG.6** illustrates a scenario when the entity navigates through various sections of the navigation space while using relative position offered by each section, either walls or the lanes, based on the choice of respective sensors, according to one embodiment herein.
**FIG.7** illustrates the reliability of the refined absolute position offered by the present invention during a typical navigation between two points, according to one embodiment herein.
**FIG.8** illustrates an embodiment to find the relative orientation of the entity using proximity sensing devices that form part of the second set of diversified sensors, according to one embodiment herein
Although the specific features of the embodiments herein are shown in some drawings and not in others. This is done for convenience only as each feature may be combined with any or all of the other features in accordance with the embodiments herein.

### DETAILED DESCRIPTION OF THE EMBODIMENTS

In the following detailed description, a reference is made to the accompanying drawings that form a part hereof, and in which the specific embodiments that may be practiced is shown by way of illustration. These embodiments are described in sufficient detail to enable those skilled in the art to practice the embodiments and it is to be understood that other changes may be made without departing from the scope of the embodiments. The following detailed description is therefore not to be taken in a limiting sense.

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

The various embodiments herein provide a system and method to determine a refined absolute position and a refined absolute orientation of an entity in a navigation space in a cost-effective manner along with good accuracy while eliminating any dependency on any dynamically changing scenario or unplanned changes in the navigation space. With no reference to historical data, quality of the absolute position and orientation remains the same and does not degrade during any interval of time due to dependency on recency of old data.

The various embodiments disclosed herein provide a method and a system for determining a refined absolute position and orientation of an entity in a navigation space is provided. The system and method disclosed herein determine a refined absolute position and a refined absolute orientation of an entity in a navigation space based on extraction of diversified features in the navigation space using diversified sensors used to seamlessly help improve accuracy of absolute position including on-the-fly switchovers. Also, the system and method disclosed herein achieves accurate absolute position using coarse absolute position and a unique combination of relative positions extracted from diversified sensors using specific features in the navigation space. The entity can include a stationary object or a mobile object.

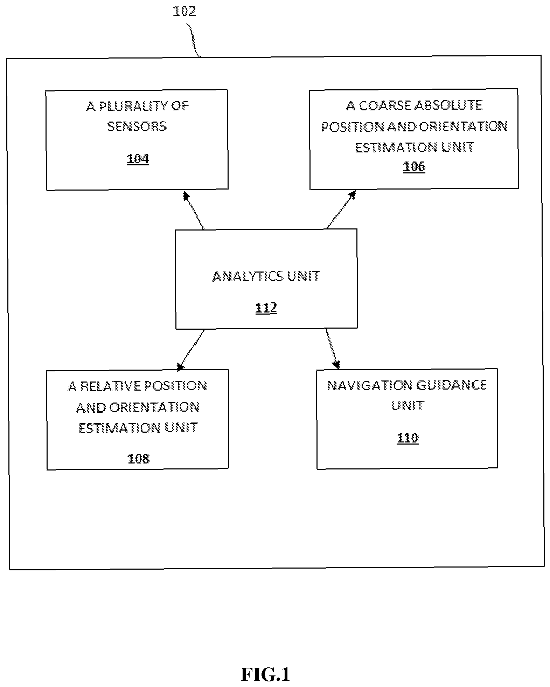

**FIG.1** illustrates a block diagram of a system for determining a position and an orientation of an entity in a navigation space, according to one embodiment herein. As depicted in FIG. 1, the system 102 includes a plurality of sensors 104, a coarse absolute position and orientation estimation unit 106, a relative position and orientation estimation unit 108, a navigation guidance unit 110, and an analytics unit 112. The entity may include for example, a stationary object or a mobile object (such as for example, a mobile factory equipment or vehicle). The navigation space includes an enclosed space or an open space with predefined boundaries, such as for example, a space inside a factory unit. According to one embodiment herein, the plurality of sensors includes a first set of sensors disposed on a first plurality of locations on the entity and a second set of sensors disposed on a second plurality of locations on the entity. The second plurality of sensors may include, for example, but not limited to, proximity sensing devices, image capture devices etc.

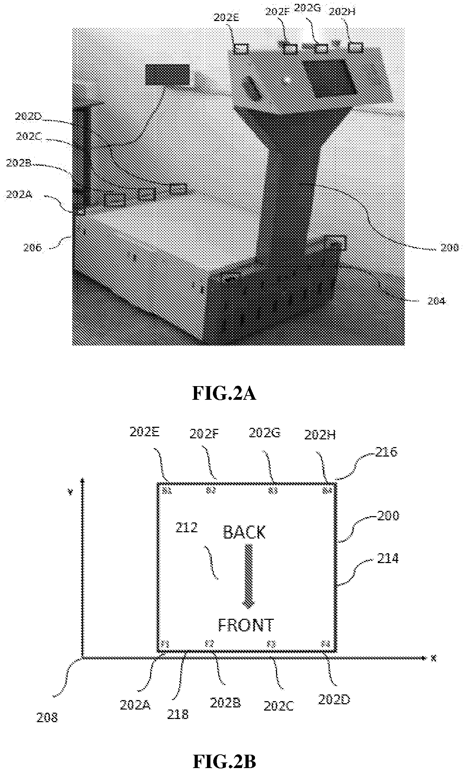

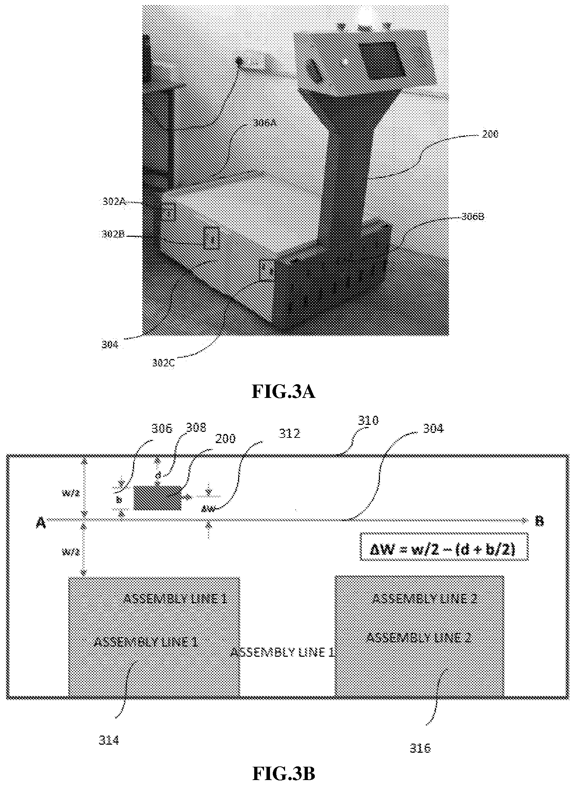

According to one embodiment herein, the coarse absolute position and orientation estimation unit 106 is configured to determine at least one of: a coarse absolute position and a coarse absolute orientation, of the entity based on a position data captured at predetermined frequency/interval by the first set of sensors (explained further along with FIGs. 2A-2B). The predetermined path includes an ideal navigation path for the entity within the navigation space. According to one embodiment herein, the relative position and orientation estimation unit 108 is configured to determine at least one of: a relative position and a relative orientation, of the entity relative to the predetermined path based on a set of data captured at predetermined frequency/interval from the second set of diversified sensors (explained further along with FIGs.3A-3C).

According to one embodiment herein, the navigation guidance unit 110 is configured to provide unique attributes based on a desired navigable layout identified in the indoor navigation space and to update one or more of the attributes dynamically as a learning/feedback based on a historical navigation data. According to one embodiment herein, the navigation guidance unit 110 includes a centralized/local system or a device that contains unique pre-defined attributes for every line segment of a virtual map created for the navigation space (e.g. factory floor). The unique pre-defined attributes include, but is not limited to nodes, destination points, absolute coordinates of nodes and other attributes, valid paths connecting each node with every other node, an optimal route between nodes, an associated cost and intermediate transition angles, an augmentation for each line segment such as an ideal path for the segment, presence/usability of a wall on either side of the passage with sub-section granularity capturing possible gaps when wall is not present, presence of lane lines on either side of the line segment, a lane width, a maximum speed to travel based on lane width and any other consideration, an orientation angle offset at each node and the like.

According to one embodiment herein, the navigation guidance unit 110, generates an initial map using initial set of input data such as for example node coordinates, valid paths, path width, and the like. The initial set of input data is processed to arrive at a robust map in a unique way that pretty much has every attribute required to perform successful navigation from the very first run without any specific training need for the entity 200. For subsequent refinements / dynamic update of attributes like node orientation angle offset, presence of a wall or fixed structure along path, reliability of a lane marking on the floor for a given segment and the like. The navigation guidance unit 110, gathers/collects various data from the entity during navigation and applies machine learning (ML) techniques for further inference. According to an embodiment of the present invention, the dynamic map generation unit 110, uses the data inferred based on ML collected based on the experience of various entities and further applies artificial intelligence techniques and refines the attributes updates the initial map. Subsequently, the updated map is made available from very next navigation for all entities in the navigation space.

According to one embodiment herein,, the analytics unit 112 is configured to determine at least one of a refined absolute position and a refined absolute orientation of the entity at a predetermined frequency/interval by fine tuning: the coarse absolute position and the coarse absolute orientation based on 1) one or more of the plurality of inputs provided by the relative position and orientation estimation unit (108), 2) coarse absolute position of the entity and 3) unique attributes provided by the navigation guidance unit (110). According to one embodiment herein, the analytics unit 112 is configured to transform the predetermined path 304 by rotating a navigation plane 402 associated with the predetermined path by a rotation angle so as to align the predetermined path parallel to one of X-axis or Y-axis of the two-dimensional cartesian plane to generate a transformed navigation plane 404 wherein the coarse absolute position as well undergoing the same rotation to become transformed coarse absolute position of the entity. According to one embodiment herein, the analytics unit 112 is configured to apply a refinement to the transformed absolute position based on one or more of the plurality of inputs from the relative position and orientation estimation unit to obtain a transformed refined absolute position of the entity on the transformed navigation, wherein the refinement is a simple substitution of a combination of a transformed ideal coordinate value of interest and one or more of the plurality of deviations from the predetermined path from among the plurality of inputs from the relative position and orientation estimation unit, to either X or Y value of the transformed coarse absolute position coordinates of the entity depending up on the rotation applied during transformation of the plane, wherein the transformed ideal coordinate value of interest is the same as one of the transformed ideal starting point coordinate values selected based on the transformation applied, wherein the ideal starting point is the theoretical coordinates for the starting node in the line segment obtained from the navigation map. According to one embodiment herein, the analytics unit 112 is configured to obtain a refined absolute position of the entity by rotating the navigation plane in the reverse direction by same quantity as the rotation angle back to the original orientation of the navigation plane 402, wherein the transformed refined absolute position rotates by the same angle to provide the refined absolute position of the entity. (explained further along with FIGs 4A-4B).

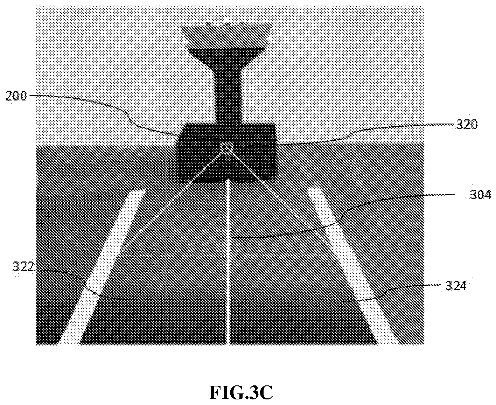

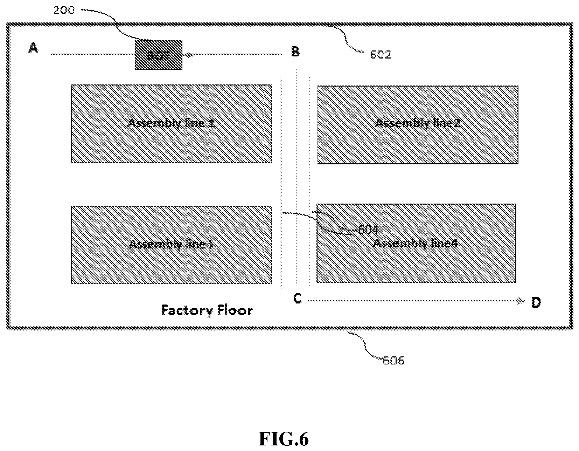

According to one embodiment herein, the analytics unit 112 derives the refined absolute orientation of the entity based on 1) the relative orientation of the entity obtained from the relative position and orientation estimation unit 108 and 2) the coarse absolute orientation obtained from the coarse absolute position and orientation estimation unit 106, wherein in the transformed navigation plane the relative position and orientation estimation unit 108 provides the relative orientation of the entity with respect to the transformed path which is either parallel to one of X-axis or Y-axis based on the transformation applied, wherein as the absolute orientation of the transformed path is the same as one of X-axis or Y-axis, a transformed absolute orientation of the entity in the transformed navigation plane is derived by adding the relative orientation of the entity along with its sign to the absolute orientation of the transformed path, wherein by rotating the transformed navigation plane 404 in the reverse direction by the same quantity as the rotation angle, the transformed absolute orientation angle undergoes similar rotation and provides an interim representation of the absolute orientation of the entity, wherein the refined absolute orientation of the entity is obtained as a weighted combination of the coarse absolute orientation and the interim representation of the absolute orientation of the entity. (explained further along with FIGs 3C, 4A-4B and 8). According to an embodiment of the present invention, the analytics unit 112 is configured to select and use one or more of the relative positions and the relative orientations from the relative position and orientation estimation unit 108 from among a plurality of inputs, wherein such plurality of inputs to the analytics unit 112 is derived by the relative position and orientation estimation unit 108 using the diversified set of sensors among the second set of sensors. The choice of the specific inputs to be used is guided by the navigation map based on the coarse absolute position. According to one embodiment herein, the analytics unit 112 is configured to seamlessly select and use one or more of the relative position and the relative orientation from among the plurality of inputs while navigating through different sections of a navigation layout involving either a plurality of line segments or a single line segment with varying physical attributes, wherein the selection is guided by the navigation map based on the coarse absolute position of the entity wherein the navigation map provides the physical attributes associated with each such line segment like, for example but not limited to, a wall adjacent to the navigation path along with its side, presence of lane marking and others (explained further along with FIG. 6)..

**FIGS. 2A-2B** exemplarily illustrates positioning of the first set of sensors at the first plurality of locations on an example entity, according to one embodiment herein. As depicted in FIG. 2A the example entity 200 includes a front end 206 and a rear end 204. The first set of sensors 202A-H includes a rear set of sensors 202E- H disposed on the rear end 204 and a front set of sensors 202 A-D disposed on the front end 206, of the example entity 102. FIG. 2B depicts a representation of positioning of the first set of sensors 202A-H on the example entity 200 in an X-Y plane 208. As depicted in FIG. 2B the points B1 to B4 and the points F1 to F4 represent the positioning of the sensors 202E-H and 202A-D respectively. The first set of sensors 202A-H are positioned in a manner to achieve a three-dimensional spatial diversity. The first set of sensors 202A-H capture an absolute position of the example entity and the absolute position provided by each sensor is used to calculate a redundant set of absolute orientation representations and an average of the absolute orientation representations is used to determine an absolute orientation of the entity in the XY plane 208.

According to one embodiment herein, the position of the entity (such as example entity 200) as captured by the first plurality of sensors (such as the first plurality of sensors 202A-H) is used to determine at least one of a coarse absolute position and/or a coarse absolute orientation. According to one embodiment herein, the coarse absolute position and orientation estimation unit 106 determines of the lines B1F1 212 & B4F4 214 as depicted in FIG. 2B. The lines B1F1 212 & B4F4 214, from back to front provide a representation of the angle that the entity is facing at any given instance with respect to the predetermined path. The coarse absolute position and orientation estimation unit 106 determines the angle of the lines B1B4 216 and F1F4 218. The lines B1B4 216 and F1F4 218 provide an angle that is 90 degrees higher than the angle of the entity. The absolute position unit 106 combines the angles to get a Quad_Sensor_Angle. The Quad_Sensor_Angle is given by equation (1): $Quad_Sensor_Angle = \left(\left(∠B1F1+∠B4F4+\left(∠B1B4-90\right)+\left(∠F1F4-90\right)\right)\right. / 4 2$ (1)

According to one embodiment herein, the coarse absolute position and orientation estimation unit 106 determines a first centre point (BC) using the points B1B2B3B4. The BC is given by equation (2): $BC = \left(B1+B2+B3+B4\right) / 4$ (2)

According to one embodiment herein, the coarse absolute position and orientation estimation unit 106 determines a second centre point (FC) using the points B1B2B3B4. FC is given by equation (3): $FC = \left(F1+F2+F3+F4\right) / 4$ (3)

The coarse absolute position and orientation estimation unit 106 determines an angle (Centre_Of_Sensors_Angle) representing the line BCFC given by equation (3): $Centre_Of_Sensors_Angle = ∠ BCFC$ (4)

According to one embodiment herein, the coarse absolute position and orientation estimation unit 106 determines an angle representing the line B1F4 and an angle representing the line B4F1. Although the lines B1F4 and B4F1 have an offset with respect to the orientation of the entity, as the first set of sensors 202A-H are positioned in a rectangular fashion, the offset gets negated. For example, as depicted in FIG. 2B an actual orientation of the entity is 270 degrees. Suppose B1F4 is at an angle 300 degrees, then B4F1 would be at 240 degrees. Accordingly, a sum of the angle of B1F4 and angle of B4F1 gives a representation of instantaneous orientation (Big_Diagonal_Angle ) of the entity given by equation (5): $Big_Diagonal_Angle = \left(∠B1F4+∠B4F1\right) / 2$ (5)

According to one embodiment herein, the coarse absolute position and orientation estimation unit 106 determines uses the points BC and FC identified in Centre_Of_Sensors_Angle. The coarse absolute position and orientation estimation unit 106 determines angles representing BCF1 & BCF4 and determines an average of the angles to obtain an angle SD_Angle_1. The coarse absolute position and orientation estimation unit 106 determines angles representing B1FC & B4FC and an average of the angles to get an angle SD_Angle_2. The coarse absolute position and orientation estimation unit 106 determines a Small Diagonal Angle by averaging SD_Angle_1 and SD_Angle_2 given by equation (6): $Small_Diagonal_Angle = \left(\left(∠BCF1+∠BCF4\right)/2+\left(∠B1FC+∠B4FC\right)/2\right) / 2$ (6)

According to one embodiment herein, the coarse absolute position and orientation estimation unit 106 determines a coarse absolute orientation of the entity given by equation (7): $coarse absolute orientation = \left(\begin{matrix}K 1 * Quad_Sensor_Angle + \\ K 2 * Center_Of_Sensors_Angle + K 3 * Big_Diagonal_Angle + \\ K 4 * Small_Diagonal_Angle\end{matrix}\right) / \left(K1+K2+K3+K4\right)$ (7) where K1, K2, K3 and K4 are multiplication constants arrived based on a confidence level of each angle representation.

FIGS. 3A-3B exemplarily illustrates positioning of second set of sensors at the second plurality of locations on an example entity, according to one embodiment herein. As depicted in FIG. 3A the second set of sensors 302A-C are positioned along a left-side surface 304 of the example entity 200. The second set of sensors 302A-C can also be positioned along a right-side surface of the example entity 200 (not shown). The second set of sensors 302A-C provide a measure of a distance (d) of the entity from side walls or a fixed structure located on a side of a pathway.

The relative position and orientation estimation unit 108 determines a deviation from the predetermined path (ideal navigation path) based on the distance (d) as explained further along with FIG. 3B. FIG.3B illustrates a process of determining a deviation of the entity from the predetermined path during navigation in the navigation space, in accordance with an embodiment. As depicted in FIG. 3B, a width of the entity 200 is represented by "b" 306, a distance of the entity 200 from a left side wall 310 is represented by "d" 308. The relative position and orientation estimation unit 108 determines the deviation (Δw) 312 given by equation (8): $Δw = w / 2 - \left(d+b/2\right)$ (8) where w/2 represents a distance between the left wall 310 and the predetermined path 304 and a distance between the predetermined bath and an assembly line-1 314 or assembly line-2 316 in a navigation space.

According to one embodiment herein, the relative position and orientation estimation unit 108 is configured to determine a relative position and/or a relative orientation of the entity 200 based on a sensor (for example, an image capturing device) from among the second set of sensors, positioned in front, back, and/or middle of the entity 200 by determining a relative position of the entity 200 inside a marked passage like a lane as depicted in FIG. 3C. Sensors 306A and 306B placed on the front side 206 and the rear side 204 respectively as shown in FIG. 3A represent one such embodiment.

FIG. 3C exemplarily illustrates determining the relative position and relative orientation of the entity 200, according to one embodiment herein. More particularly, FIG. 3C depicts a front perspective view of the entity 200 with a sensor (image capture device) 320 positioned on the front side of the entity 200. The entity navigates along the predetermined path 304. The sensor 320 captures the distance of the entity 200 relative to a pair of lane lines 322 and 324. The relative position and orientation estimation unit 108 determines a deviation Δw of the entity 200 from the predetermined path (or ideal path) 304 based on a distance from the middle of the entity (where sensor or image capture device is placed). The deviation Δw of the entity 200 is determined based on equation (8). Also, the difference in the angle of the lane lines as perceived by the sensor 320 enables the relative position and orientation estimation unit 108 to determine the relative orientation of the entity with respect to the lane lines.

According to one embodiment herein, the relative position and orientation estimation unit 108 determines the relative position and relative orientation of the entity 200 using a system that provides the depth information of the predetermined path 304. Using the depth information, the relative position and orientation estimation unit 108 draws virtual lanes and then the deviation from the predetermined path 304 is identified as explained along with FIGS 3B-3C.

FIGS. 4A-4B depicts a transformation of a navigation plane 402 to align the predetermined path with Y-axis always as shown in the transformed navigation plane 404, according to one embodiment herein, wherein the coarse absolute position transforms to become transformed coarse absolute position of the entity. A floor alignment similar to FIG. 3B requires a simple step to augment a deviation of the entity 200 from the predetermined path, by refining only the Y value among the XY coordinates determined based on the transformed coarse absolute position. For a generic solution that eliminates the constraint on factory floor alignment with XY axes, the analytics unit 112 transforms the predetermined pathway (line segment) by means of plane rotation so as to always align it parallel to one of the axes, such as for example, Y axis. As depicted in FIG. 4A, if (x,y) is an absolute set of coordinates of the entity 200 provided by the coarse absolute position and orientation estimation unit 106, the analytics unit 112 rotates an initial plane 402 by Θ (angle between the direction of the entity and the Y-axis) to obtain a transformed plane 404 parallel to the Y axis, the transformed coordinates of the entity 200 in a transformed plane 404 would be (xₜ, yₜ), where xₜ is given by equation (9): ${x}_{t} = x * cos \left(Θ\right) + y * sin \left(Θ\right) ; {y}_{t} = - x * sin \left(Θ\right) + y * cos \left(Θ\right)$ (9)

As deviation from the predetermined (ideal) path in the transformed plane 404 is a simple refinement only to xₜ, the analytics unit 112 applies the refinement based on the instantaneous relative position of the entity 200 received from the relative position and orientation estimation unit 108 to get the coordinates (x'ₜ, yₜ). Given, (xᵢ , yᵢ) the start coordinates in the predetermined path, the transformed xᵢ value xᵢ^{t} is given by equation (10): ${{x}^{i}}_{t} = {x}^{i} * cos \left(Θ\right) + {y}^{i} * sin \left(Θ\right)$ (10)

After transformation, the predetermined (ideal) path would be parallel to the Y-axis and all values in the predetermined path will have same value xⁱₜ. The analytics unit 112 applies refinement to xₜ based on the instantaneous relative position of the entity 200 received from the relative position and orientation estimation unit 108 to obtain x'ₜ given by equation (11): $x {′}_{t} = {{x}^{i}}_{t} - Δw$ (11) upon the wall being on the right side of a direction of navigation of the entity 200, then x'ₜ is given by equation (12): $x {′}_{t} = {{x}^{i}}_{t} + Δw$ (12) upon the wall being on the left side of a direction of navigation of the entity 200, where Δw is the deviation of the entity with respect to the pre-determined path 304 derived in equation (8) (explained further with FIG. 3B), where, xⁱₜ is the transformed 'x' value of the start coordinate in the ideal path, w is the width of the path, d is the relative distance reported by the plurality of sensors from the side of the entity 200 to the wall, and b is the width of the entity 200.

According to one embodiment herein, the analytics unit 112 rotates the plane back to the original orientation of the navigation plane 402 after rotation and translation in order to obtain (x'ₜ, yₜ), as depicted in FIG. 4B. The analytics unit 112 obtains the refined absolute position of the entity 200 (x', y ') in the navigation plane 402 given by equation (13):
$x ′ = x {′}_{t} * cos \left(Θ\right) - {y}_{t} sin \left(Θ\right) ; y ′ = x {′}_{t} * sin \left(Θ\right) + {y}_{t} cos \left(Θ\right)$ (13)

The refined absolute coordinates (x', y') provides precise absolute position of the entity 200 with respect to the predetermined path 304 with a maximum error of, for example 10 cm.

According to one embodiment herein, the analytics unit 112 derives the absolute orientation of the entity using the relative orientation of the entity provided by the relative position and orientation estimation unit 108. As the transformed path in 404 is parallel to Y axis, the orientation of the transformed path is 90⁰. By refining the absolute orientation of the transformed path shown in 404 using the relative orientation of the entity followed by rotation of the plane back to the original orientation of the navigation plane 402, the absolute orientation of the entity in the navigation plane 402 is obtained. A weighted combination of this absolute orientation and the coarse absolute orientation provided by the coarse absolute position and orientation estimation unit (106) provides the final refined absolute orientation of the entity as derived by the analytics unit (112). The weightages are decided based on the accuracy offered by the specific relative input from the relative position and orientation estimation unit 108 and the coarse absolute position and orientation estimation unit (106).

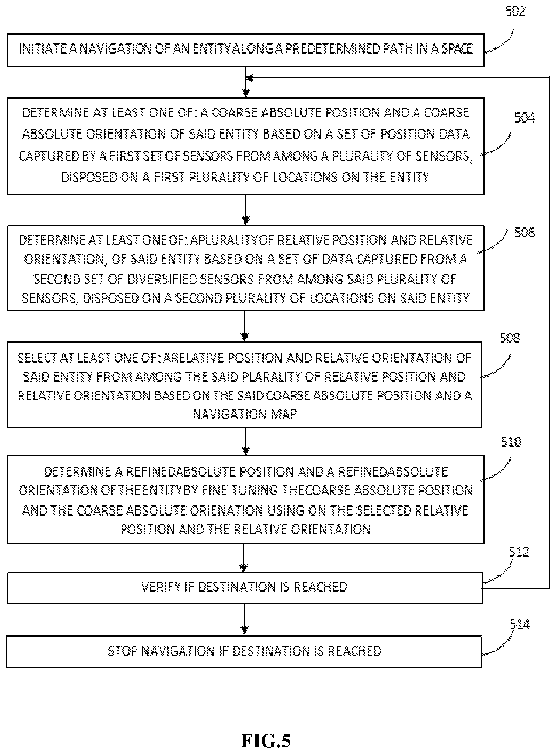

FIG. 5 is a flow diagram illustrating a process of find the refined absolute position and refined absolute orientation of an entity at a predetermined frequency/interval to facilitate navigation of the entity 200 along a predetermined path in a navigation space, using the system 102 of FIG 1, according to one embodiment herein. At step 502, a navigation of the entity is initiated along the predetermined path in the navigation space. At step 504, at least one of: a coarse absolute position and a coarse absolute orientation of the entity is determined based on a position data captured by a first set of sensors from among a plurality of sensors, disposed on a first plurality of locations on the entity. At step 506, at least one of: a plurality of relative position and a relative orientation, of the entity is determined with respect to the pre-determined path based on a set of data captured from a second set of diversified sensors from among the plurality of sensors, disposed on a second plurality of locations on the entity. At step 508, selecting at least one of: a relative position and relative orientation of the entity with respect to the predetermined path from among the plurality of relative position and relative orientation based on the coarse absolute position and a navigation map. At step 510, a refined absolute position and a refined absolute orientation of the entity is determined by fine tuning: the coarse absolute position based on relative position and the coarse absolute orientation based on relative orientation using an navigation map, wherein the navigation map is generated based on a map data and a machine learning model based on a historical navigation data. At step 512, it is verified if the destination is reached. Upon reaching the destination, at step 514, the navigation is stopped. Upon not reaching the destination steps 504 to 512 are repeated.

FIG.6 represents a typical navigation scenario wherein the entity moves across various sections of the navigation space as it traverses from point A to D, according to one embodiment herein. During the course of navigation, for each section, relative position of the entity is obtained based on the context and the attributes offered by the respective section of the layout and provided by the navigation map. For example, when the entity navigates through section AB, the relative position is obtained with respect to the adjacent wall on the left side (602). Between point B and C, the lane markings (604) offer a representation of the relative position of the entity with respect to the lane lines. Again, to navigate through section CD, the adjacent wall on the right side (606) is used to find the relative position of the entity. Seamless switch-over between sensors during navigation based on the context of the given navigation section is supported by the navigation map.

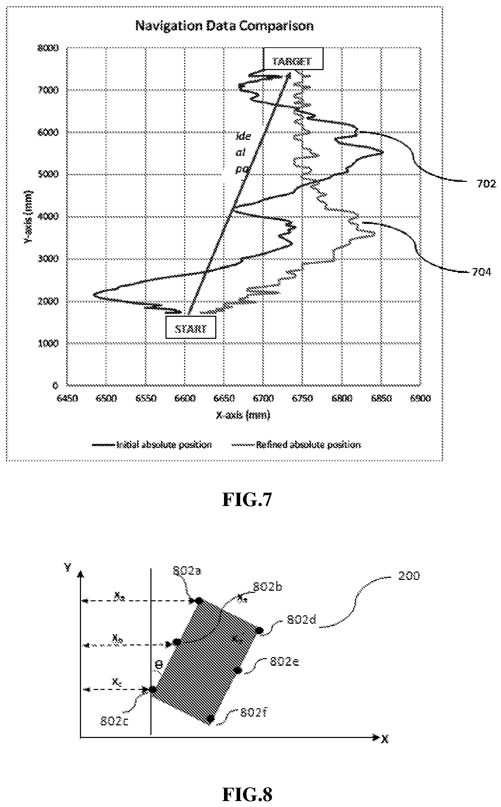

FIG. 7 shows the improvements offered by the present invention with refined representation of the absolute position and orientation of the entity that enhances the ability of the entity to navigate reliably and reach the target successfully, according to one embodiment herein. The comparison of the trajectory, for a given navigation, between the refined absolute position (704) and the coarse absolute position (702) clearly demonstrates the consistency in the trajectory offered by the present invention.

FIG. 8 illustrates an embodiment to find the relative orientation of the entity using proximity sensing devices that form part of the second set of diversified sensors, according to one embodiment herein. According to the embodiment, explained further along with FIGs 4A-4B, the navigation plane 402 is rotated so as to align the predetermined path parallel to the Y-axis. In this transformed plane 404, using the distance measure provided by the proximity sensors 802a-c, slope of the straight line connecting 802a-c can be obtained in the transformed plane 404. By rotating the entity back to the navigation plane 402, the slope of the straight line undergoes similar rotation. The revised slope of this line gives a measure of an interim representation of the absolute orientation of the entity in the navigation plane 402, wherein the refined absolute orientation of the entity (200) is obtained as a weighted combination of the coarse absolute orientation and the interim representation of the absolute orientation of the entity.

The various embodiments of system and process of navigating an entity along a predetermined path in a navigation space disclosed herein facilitate an instantaneous accurate representation of absolute position using a combination of absolute positioning system, one such embodiment being wireless technology (local positioning system), and embodiments of relative sensor data. The present technology does not need to refer to any historical data, either short term or long term, to determine the position, there is no need for a training phase to generate any template for future comparison. Additionally, since in the present technology the data from multiple sensors are captured simultaneously to arrive at instantaneous absolute position representation, with no reference to any historical data, quality of the absolute position remains the same and does not degrade during any interval of time due to dependency on recency of old data and also the absolute position does not depend on any fixed references on the floor. Thus, the vulnerability associated with dynamic changes in the location of the fixed references is completely avoided. Planned changes like introduction of a new navigation path, demolition of an existing wall, construction of a new wall and the like would anyway get updated in the unique floor map maintained for the location. Moreover, the present technology provides a cost-effective system and process that provides good accuracy along with eliminating the dependency on any dynamically changing scenario on the floor unless it is a planned change like change in the navigation path, modifying the layout like breaking a wall, and the like.
Additionally, the present technology enables determining a refined absolute position and refined absolute orientation of an entity in a navigation space that achieves accurate absolute position using coarse absolute position and a unique combination of relative positions extracted from diversified sensors using specific features in the navigation space. The present technology also enables a seamless switch-over between sensors during navigation based on the context as supported by a unique navigation map providing better accuracy compared to existing techniques. The present technology enables navigation of an entity reliably using the refined absolute position and refined absolute orientation of the entity thus minimizing the deviation from ideal path and reaching the target faithfully.

## Claims

1. A system (102) for determining an instantaneous absolute position and absolute orientation of an entity (200) in a navigation space, the system (102) comprising:
a plurality of sensors (104) comprising a first set of sensors (202A-H) disposed on a first plurality of locations on the entity (200), wherein the first set of sensors (202A-H) are disposed as a part of a cartesian coordinate system provided by a local positioning system formed using a technology selected from a group consisting of UWB, Bluetooth, Zigbee, Ultrasound, and a second set of sensors (302A-C) disposed on a second plurality of locations on the entity (200);
a coarse absolute position and orientation estimation unit (106) configured to determine a coarse absolute position and a coarse absolute orientation of the entity (200) based on position data captured in a two-dimensional cartesian plane of the cartesian coordinate system at a predetermined frequency/interval by the first set of sensors (202A-H);
a relative position and orientation estimation unit (108) configured to determine a relative position and a relative orientation of the entity (200) with respect to a predetermined path (304) of the entity (200) in the navigation space based on a set of data captured at the predetermined frequency/interval from the second set of sensors (302A-C), wherein the set of data captured represents one of a relative deviation and a relative inclination of the entity (200) with respect to predetermined physical features in the navigation space;
a navigation guidance unit (110) configured to generate a navigation map that provides unique attributes based on a navigation layout identified in the navigation space, and to update one or more of the unique attributes of the navigation map dynamically as a learning/feedback based on historical navigation data, wherein the navigation guidance unit (110) is positioned inside the entity (200) or outside the entity (200); and
an analytics unit (112) configured to select and use one or more of the relative positions and the relative orientations provided by the relative position and orientation estimation unit (108) as a plurality of inputs, and wherein the analytics unit (112) is configured to determine a refined absolute position and a refined absolute orientation of the entity (200) at the predetermined frequency/interval by fine tuning the coarse absolute position and the coarse absolute orientation based on:
one or more of the selected inputs provided by the relative position and orientation estimation unit (108);
the unique attributes provided by the navigation guidance unit (110);
wherein the entity (200) comprises a stationary object or a mobile object.

2. The system (102) as claimed in claim 1, wherein the analytics unit (112) is configured to:
transform the predetermined path (304) by rotating a navigation plane (402) associated with the predetermined path (304) by a rotation angle so as to align the predetermined path (304) parallel to one of X-axis or Y-axis of the two-dimensional cartesian plane and to generate a transformed navigation plane (404), wherein the coarse absolute position undergoes same rotation to become a transformed coarse absolute position of the entity (200);
apply a refinement to the transformed coarse absolute position based on one or more of the plurality of inputs provided by the relative position and orientation estimation unit (108) and obtain a transformed refined absolute position of the entity (200) on the transformed navigation plane (404), wherein the refinement is a simple substitution of a combination of a transformed ideal coordinate value of interest and one or more of a plurality of deviations from the predetermined path (304) obtained from among the plurality of inputs provided by the relative position and orientation estimation unit (108) to either X or Y value of the transformed coarse absolute position coordinates of the entity (200) depending upon the rotation applied during a transformation of the navigation plane (404), and wherein the transformed ideal coordinate value of interest is equal to one of a transformed ideal starting point coordinate values selected based on the transformation applied, and wherein the transformed ideal coordinate value of interest is equal to X coordinate value for a transformed predetermined path aligned parallel to the Y-axis of the cartesian plane and vice versa, and wherein an ideal starting point is theoretical coordinates for the starting node in a line segment obtained from the navigation map; and
obtaining a refined absolute position of the entity (200) by rotating the transformed navigation plane (404) in a reverse direction by the same angle which is equal to the rotation angle back to the original orientation of the navigation plane (402), and wherein the transformed refined absolute position is rotated by the same angle to provide the refined absolute position of the entity (200).

3. The system (102) as claimed in claim 1 or 2, wherein the analytics unit (112) is configured to:
derive the refined absolute orientation of the entity (200) based on:
1) the relative orientation of the entity (200) obtained from the relative position and orientation estimation unit (108); and
2) the coarse absolute orientation obtained from the coarse absolute position and orientation estimation unit (106);
wherein the relative orientation of the entity (200) with respect to the predetermined path (304) provided by the relative position and orientation estimation unit (108) along with its sign of orientation is added to an orientation of the predetermined path (304) in the transformed navigation plane (404) to obtain the transformed absolute orientation of the entity (200) in the transformed navigation plane (404);
wherein the orientation of the predetermined path (304) in the transformed navigation plane (404) is same as either the X-axis or the Y-axis of the two-dimensional cartesian plane, based on the transformation applied;
wherein by rotating the navigation plane (404) in the reverse direction by the same angle as the rotation angle back to the original orientation of the navigation plane (402), the transformed absolute orientation angle undergoes a similar rotation and provides an interim representation of the absolute orientation of the entity (200);
wherein the refined absolute orientation of the entity (200) is obtained as a weighted combination of the coarse absolute orientation and the interim representation of the absolute orientation of the entity (200).

4. The system (102) as claimed in one of the preceding claims, wherein a choice of the inputs to be used is guided by the navigation map based on the coarse absolute position of the entity (200).

5. The system (102) as claimed in one of the preceding claims, wherein the analytics unit (112) is configured to seamlessly select the relative position and the relative orientation from among the plurality of inputs provided by the relative position and orientation estimation unit (108) while navigating through a plurality of mutually different sections of the navigation layout involving either a plurality of line segments or a single line segment with mutually different physical attributes, and wherein selection by the analytics unit (112) is guided by the navigation map based on the coarse absolute position of the entity (200), and wherein the navigation map provides the physical attributes associated with each line segment, wherein the physical attributes is a wall adjacent to the navigation path along with its side, or presence of a lane marking.

6. The system (102) as claimed in one of the preceding claims, wherein the first plurality of locations on the entity (200) comprises a front end and a rear end of the entity (200), and wherein the second plurality of locations is selected from a group consisting of a left side of the entity (200), a right side of the entity (200), a front end of the entity (200), and a back end of the entity (200).

7. The system (102) as claimed in one of the preceding claims, wherein the second set of sensors (302A-C) comprises proximity sensing devices and image capture devices, and wherein upon using the second set of sensors (302A-C), the relative position and orientation estimation unit (108) provides the plurality of inputs to the analytics unit (112), the plurality of inputs representing a relative position and an relative orientation of the entity (200) relative to the predetermined path (304) derived based on the set of data captured at the predetermined frequency/interval from the second set of sensors (302A-C), and wherein the data captured represents one of a relative deviation and a relative inclination of the entity (200) with respect to certain known fixed physical features in the navigation space and wherein the relative position and orientation estimation unit (108) derives a plurality of such relative positions and relative orientations based on the set of data captured from the second set of sensors (302A-C).

8. A method to provide one of a refined absolute position and a refined absolute orientation of an entity (200) at a predefined frequency/interval to facilitate navigation of the entity (200) along a predetermined path in a navigation space wherein the entity (200) comprises a stationary object or a mobile object, the method comprising steps of:
a) initiating (502) navigation of the entity (200) along the predetermined path in the navigation space;
b) determining (504) a coarse absolute position and a coarse absolute orientation of the entity (200) based on a set of position data captured by a first set of sensors (202A-H) from among a plurality of sensors (104) disposed on a first plurality of locations on the entity (200);
c) determining (506) a plurality of relative positions and relative orientations of the entity (200) with respect to a predetermined path (304) of the entity (200) in the navigation space based on a set of data captured from a second set of sensors (302A-C) from among the plurality of sensors (104) disposed on a second plurality of locations on the entity (200), and providing said plurality of relative positions and relative orientations as a plurality of inputs to an analytics unit (112);
d) selecting (508), by the analytics unit (112), a relative position and a relative orientation of the entity (200) with respect to the predetermined path (304), from among the plurality of inputs, based on the coarse absolute position of the entity (200) and a navigation map;
e) determining (510) a refined absolute position and a refined absolute orientation of the entity (200) by fine tuning the coarse absolute position and the coarse absolute orientation based on the selected relative position and the selected relative orientation, respectively, and unique attributes provided by the navigation map based on a navigation layout identified in the navigation space, and wherein the navigation map is generated and updated based on map data and a machine learning model based on historical navigation data;
f) verifying (512) if a destination is reached; and
g) performing any one of:
i) repeating steps b) to f) upon the destination not being reached; and
ii) stopping (514) navigation of the entity (200) upon the destination being reached.

9. The method as claimed in claim 8, wherein in step d), a choice of a specific input to be used by the analytics unit (112) is guided by the navigation map based on the coarse absolute position of the entity (200).

10. The method as claimed in claim 8 or 9, comprises seamlessly using the selected relative position and the selected relative orientation while navigating through different sections of the navigation layout comprising a plurality of line segments or a single line segment with mutually different physical attributes, and wherein the navigation map provides the physical attributes associated with each line segment, and wherein the physical attributes are selected from a group consisting of a wall adjacent to the navigation path along with its side, and presence of a lane marking.

## Patentansprüche

1. Ein System (102) zur Bestimmung einer momentanen absoluten Position und einer absoluten Orientierung eines Objekts (200) in einem Navigationsraum, wobei das System (102) umfasst:
eine Vielzahl von Sensoren (104), die einen ersten Satz von Sensoren (202A-H), die an einer ersten Vielzahl von Stellen an dem Objekt (200) angeordnet sind, wobei der erste Satz von Sensoren (202A-H) als Teil eines kartesischen Koordinatensystems angeordnet ist, das von einem lokalen Positionierungssystem bereitgestellt wird, das unter Verwendung einer Technologie gebildet wird, die aus einer Gruppe ausgewählt ist, bestehend aus UWB, Bluetooth, Zigbee und Ultraschall, gebildet wird, und einen zweiten Satz von Sensoren (302A-C), die an einer zweiten Vielzahl von Stellen an dem Objekt (200) angeordnet sind, umfassen;
eine Einheit zur groben Schätzung der absoluten Position und Orientierung (106), die so konfiguriert ist, dass sie eine grobe absolute Position und eine grobe absolute Orientierung des Objekts (200) auf der Grundlage von Positionsdaten ermittelt, die in einer zweidimensionalen kartesischen Ebene des kartesischen Koordinatensystems mit einer vorgegebenen Frequenz bzw. in vorgegebenen Intervallen durch den ersten Satz von Sensoren (202A-H) erfasst werden;
eine Schätzeinheit für die relative Position und Orientierung (108), die so konfiguriert ist, dass sie eine relative Position und eine relative Orientierung des Objekts (200) in Bezug auf einen vorgegebenen Pfad (304) des Objekts (200) im Navigationsraum auf der Grundlage eines Datensatzes zu ermitteln, der mit der vorgegebenen Frequenz/dem vorgegebenen Intervall von dem zweiten Sensorsatz (302A-C) erfasst wird, wobei der ermittelte Datensatz entweder eine relative Abweichung oder eine relative Neigung des Objekts (200) in Bezug auf vorgegebene physikalische Merkmale im Navigationsraum darstellt;
eine Navigationsführungseinheit (110), die so konfiguriert ist, dass sie eine Navigationskarte erzeugt, die eindeutige Attribute auf der Grundlage eines im Navigationsraum identifizierten Navigationslayouts bereitstellt, und dass sie eines oder mehrere der eindeutigen Attribute der Navigationskarte dynamisch als Lernen/Rückkopplung auf der Grundlage historischer Navigationsdaten aktualisiert, wobei die Navigationsführungseinheit (110) innerhalb des Objekts (200) oder außerhalb des Objekts (200) positioniert ist; und
eine Analyseeinheit (112), die so konfiguriert ist, dass sie eine oder mehrere der von der Schätzeinheit für die relative Position und Orientierung (108) bereitgestellten relativen Positionen und relativen Orientierungen als eine Vielzahl von Eingaben auswählt und verwendet, und wobei die Analyseeinheit (112) so konfiguriert ist, dass sie eine verfeinerte absolute Position und eine verfeinerte absolute Orientierung des Objekts (200) mit der vorgegebenen Frequenz/dem vorgegebenen Intervall zu ermitteln, indem die grobe absolute Position und die grobe absolute Orientierung auf der Grundlage folgender Faktoren feinabgestimmt werden:
einer oder mehrerer der ausgewählten Eingaben, die von der Schätzeinheit für relative Position und Orientierung (108) bereitgestellt werden;
der eindeutigen Attribute, die von der Navigationsführungseinheit (110) bereitgestellt werden;
wobei das Objekt (200) ein stationäres Objekt oder ein mobiles Objekt umfasst.

2. Das System (102) nach Anspruch 1, wobei die Analyseeinheit (112) so konfiguriert ist, dass sie:
den vorgegebenen Pfad (304) transformiert, indem sie eine dem vorgegebenen Pfad (304) zugeordnete Navigationsebene (402) um einen Drehwinkel dreht, um den vorgegebenen Pfad (304) parallel zur X-Achse oder zur Y-Achse der zweidimensionalen kartesischen Ebene auszurichten und eine transformierte Navigationsebene (404) zu erzeugen, wobei die grobe absolute Position dieselbe Drehung durchläuft, um zu einer transformierten groben absoluten Position des Objekts (200) zu werden;
eine Verfeinerung auf die transformierte grobe absolute Position anwendet, basierend auf einer oder mehreren der Vielzahl von Eingaben, die von der Schätzeinheit für die relative Position und Orientierung (108) bereitgestellt werden, und eine transformierte verfeinerte absolute Position des Objekts (200) auf der transformierten Navigationsebene (404) ermittelt, wobei die Verfeinerung eine einfache Substitution einer Kombination aus einem transformierten idealen Koordinatenwert von Interesse und einer oder mehreren von zahlreichen Abweichungen vom vorgegebenen Pfad (304) ist, die aus der Vielzahl der von der Schätzeinheit für die relative Position und Orientierung (108) bereitgestellten Eingaben für entweder den X- oder den Y-Wert der transformierten groben absoluten Positionskoordinaten des Objekts (200), abhängig von der Rotation, die während einer Transformation der Navigationsebene (404) angewendet wurde, ermittelt wurden und wobei der transformierte ideale Koordinatenwert von Interesse gleich einem der transformierten idealen Startpunkt-Koordinatenwerte ist, die auf der Grundlage der angewandten Transformation ausgewählt werden, und wobei der transformierte ideale Koordinatenwert von Interesse gleich dem X-Koordinatenwert für einen transformierten vorgegebenen Pfad ist, der parallel zur Y-Achse der kartesischen Ebene ausgerichtet ist, und umgekehrt, und wobei ein idealer Startpunkt die theoretischen Koordinaten für den Startknoten in einem aus der Navigationskarte gewonnenen Liniensegment darstellt; und
Ermitteln einer verfeinerten absoluten Position des Objekts (200) durch Drehen der transformierten Navigationsebene (404) in umgekehrter Richtung um denselben Winkel, der gleich dem Drehwinkel ist, zurück in die ursprüngliche Orientierung der Navigationsebene (402), wobei die transformierte verfeinerte absolute Position um denselben Winkel gedreht wird, um die verfeinerte absolute Position des Objekts (200) zu liefern.

3. Das System (102) nach Anspruch 1 oder 2, wobei die Analyseeinheit (112) so konfiguriert ist, dass sie:
die verfeinerte absolute Orientierung des Objekts (200) auf der Grundlage:
1) der relativen Orientierung des Objekts (200), die von der Schätzeinheit für die relative Position und Orientierung (108) ermittelt wurde; und
2) der groben absoluten Orientierung, die von der Einheit zur groben Schätzung der absoluten Position und Orientierung (106) ermittelt wurde; erlangt;
wobei die relative Orientierung des Objekts (200) in Bezug auf den von der Schätzeinheit für die relative Position und Orientierung (108) bereitgestellten vorgegebenen Pfad (304) zusammen mit ihrem Orientierungskennvorzeichen zu einer Orientierung des vorgegebenen Pfads (304) in der transformierten Navigationsebene (404) addiert wird, um die transformierte absolute Orientierung des Objekts (200) in der transformierten Navigationsebene (404) zu ermitteln;
wobei die Orientierung des vorgegebenen Pfades (304) in der transformierten Navigationsebene (404) je nach angewandter Transformation entweder die X-Achse oder die Y-Achse der zweidimensionalen kartesischen Ebene ist;
wobei durch Drehen der Navigationsebene (404) in umgekehrter Richtung um denselben Winkel wie den Drehwinkel zurück zur ursprünglichen Orientierung der Navigationsebene (402) der transformierte absolute Orientierungswinkel eine ähnliche Drehung durchläuft und eine vorläufige Darstellung der absoluten Orientierung des Objekts (200) liefert;
wobei die verfeinerte absolute Orientierung des Objekts (200) als gewichtete Kombination aus der groben absoluten Orientierung und der vorläufigen Darstellung der absoluten Orientierung des Objekts (200) ermittelt wird.

4. Das System (102) nach einem der vorangehenden Ansprüche, wobei die Auswahl der zu verwendenden Eingaben durch die Navigationskarte auf der Grundlage der groben absoluten Position des Objekts (200) gesteuert wird.

5. Das System (102) nach einem der vorangehenden Ansprüche, wobei die Analyseeinheit (112) so konfiguriert ist, dass sie die relative Position und die relative Orientierung nahtlos aus der Vielzahl von Eingaben auswählt, die von der Schätzeinheit für die relative Position und Orientierung (108) bereitgestellt werden, während die Navigation durch eine Vielzahl von voneinander unterschiedlichen Abschnitten des Navigationslayouts erfolgt, die entweder eine Vielzahl von Liniensegmenten oder ein einzelnes Liniensegment mit voneinander unterschiedlichen physikalischen Eigenschaften einbeziehen, und wobei die Auswahl durch die Analyseeinheit (112) anhand der Navigationskarte gesteuert wird, die auf der groben absoluten Position des Objekts (200) basiert, und wobei die Navigationskarte die mit jedem Liniensegment verbundenen physikalischen Eigenschaften bereitstellt, wobei die physikalischen Eigenschaften eine an den Navigationsweg angrenzende Wand zusammen mit ihrer Seite oder das Vorhandensein einer Fahrbahnmarkierung sind.

6. Das System (102) nach einem der vorangehenden Ansprüche, wobei die erste Vielzahl von Stellen an dem Objekt (200) ein vorderes Ende und ein hinteres Ende des Objekts (200) umfasst, und wobei die zweite Vielzahl von Stellen aus einer Gruppe ausgewählt wird, die aus einer linken Seite des Objekts (200), einer rechten Seite des Objekts (200), einem vorderen Ende des Objekts (200) und einem hinteren Ende des Objekts (200) besteht.

7. Das System (102) nach einem der vorangehenden Ansprüche, wobei der zweite Satz von Sensoren (302A-C) Näherungssensoren und Bildaufnahmegeräte umfasst, und wobei bei Verwendung des zweiten Satzes von Sensoren (302A-C) die Schätzeinheit für die relative Position und Orientierung (108) die Vielzahl von Eingaben an die Analyseeinheit (112) liefert, wobei die Vielzahl von Eingaben eine relative Position und eine relative Orientierung des Objekts (200) relativ zu dem vorgegebenen Pfad (304) darstellt, die auf der Grundlage des Datensatzes erlangt wird, der mit der vorgegebenen Frequenz/dem vorgegebenen Intervall von dem zweiten Sensorsatz (302A-C) erfasst wird, und wobei die erfassten Daten entweder eine relative Abweichung oder eine relative Neigung des Objekts (200) in Bezug auf bestimmte bekannte feste physikalische Merkmale im Navigationsraum darstellen und wobei die Schätzeinheit für die relative Position und Orientierung (108) eine Vielzahl solcher relativen Positionen und relativen Orientierungen auf der Grundlage des Datensatzes erlangt, der von dem zweiten Satz von Sensoren (302A-C) erfasst wurde.

8. Ein Verfahren zum Bereitstellen einer verfeinerten absoluten Position oder einer verfeinerten absoluten Orientierung eines Objekts (200) mit einer vordefinierten Frequenz/einem vordefinierten Intervall, um die Navigation des Objekts (200) entlang eines vorgegebenen Pfads in einem Navigationsraum zu erleichtern, wobei das Objekt (200) ein stationäres Objekt oder ein mobiles Objekt umfasst, wobei das Verfahren folgende Schritte umfasst:
a) Initiieren (502) der Navigation des Objekts (200) entlang des vorgegebenen Pfades im Navigationsraum;
b) Ermitteln (504) einer groben absoluten Position und einer groben absoluten Orientierung des Objekts (200) auf der Grundlage eines Satzes von Positionsdaten, die von einem ersten Satz von Sensoren (202A-H) aus einer Vielzahl von Sensoren (104) erfasst wurden, die an einer ersten Vielzahl von Stellen am Objekt (200) angeordnet sind;
c) Ermitteln (506) einer Vielzahl von relativen Positionen und relativen Orientierungen des Objekts (200) in Bezug auf einen vorgegebenen Pfad (304) des Objekts (200) im Navigationsraum auf der Grundlage eines Datensatzes, der von einem zweiten Satz von Sensoren (302A-C) aus der Vielzahl von Sensoren (104) erfasst wurde, die an einer zweiten Vielzahl von Stellen am Objekt (200) angeordnet sind und Bereitstellen der mehreren relativen Positionen und relativen Orientierungen als eine Vielzahl von Eingaben für eine Analyseeinheit (112);
d) Auswahl (508) einer relativen Position und einer relativen Orientierung des Objekts (200) in Bezug auf den vorgegebenen Pfad (304) durch die Analyseeinheit (112) aus der Vielzahl von Eingaben auf der Grundlage der groben absoluten Position des Objekts (200) und einer Navigationskarte;
e) Ermitteln (510) einer verfeinerten absoluten Position und einer verfeinerten absoluten Orientierung des Objekts (200) durch Feinabstimmung der groben absoluten Position bzw. der groben absoluten Orientierung auf der Grundlage der ausgewählten relativen Position bzw. der ausgewählten relativen Orientierung sowie eindeutiger Attribute, die von der Navigationskarte auf der Grundlage eines im Navigationsraum identifizierten Navigationslayouts bereitgestellt werden, wobei die Navigationskarte auf der Grundlage von Kartendaten und eines auf historischen Navigationsdaten basierenden Modells des maschinellen Lernens erzeugt und aktualisiert wird;
f) Überprüfen (512), ob ein Ziel erreicht wird; und
g) Ausführen einer der folgenden Maßnahmen:
i) Wiederholen der Schritte b) bis f), falls das Ziel nicht erreicht wurde; und
ii) Beenden (514) der Navigation des Objekts (200), sobald das Ziel erreicht wurde.

9. Das Verfahren nach Anspruch 8, wobei in Schritt d) die Auswahl einer bestimmten Eingabe, die von der Analyseeinheit (112) verwendet werden soll, durch die Navigationskarte auf der Grundlage der groben absoluten Position des Objekts (200) gesteuert wird.

10. Das Verfahren nach Anspruch 8 oder 9, das die nahtlose Verwendung der ausgewählten relativen Position und der ausgewählten relativen Orientierung während der Navigation durch verschiedene Abschnitte des Navigationslayouts umfasst, das eine Vielzahl von Liniensegmenten oder ein einzelnes Liniensegment mit voneinander unterschiedlichen physikalischen Eigenschaften umfasst, wobei die Navigationskarte die jedem Liniensegment zugeordneten physikalischen Eigenschaften bereitstellt und wobei die physikalischen Eigenschaften aus einer Gruppe bestehend aus einer an den Navigationsweg angrenzende Wand zusammen mit ihrer Seite und das Vorhandensein einer Fahrbahnmarkierung ausgewählt werden.

## Revendications

1. Un système (102) de détermination de position et d'orientation absolues instantanées d'une entité (200) dans un espace de navigation, le système (102) comprenant : une pluralité de capteurs (104) comprenant un premier ensemble de capteurs (202A-H) disposés sur une première pluralité d'emplacements sur l'entité (200), dans lequel le premier ensemble de capteurs (202A-H) est disposé en tant que partie d'un système de coordonnées cartésiennes fourni par un système de positionnement local formé à l'aide d'une technologie sélectionnée dans un groupe constitué de l'UWB, du Bluetooth, de Zigbee et des ultrasons, et un second ensemble de capteurs (302A-C) disposés sur une seconde pluralité d'emplacements sur l'entité (200) ;
une unité d'estimation grossière de position et d'orientation absolues (106) configurée pour déterminer une position absolue grossière et une orientation absolue grossière de l'entité (200) sur la base de données de position capturées dans un plan cartésien bidimensionnel du système de coordonnées cartésiennes à une fréquence / un intervalle prédéterminé par le premier ensemble de capteurs (202A-H) ;
une unité d'estimation de position et d'orientation relatives (108) configurée pour déterminer une position relative et une orientation relative de l'entité (200) par rapport à un chemin prédéterminé (304) de l'entité (200) dans l'espace de navigation, sur la base d'un ensemble de données capturées à ladite fréquence / audit intervalle prédéterminé par le second ensemble de capteurs (302A-C), dans lequel l'ensemble de données capturées représente soit une déviation relative soit une inclinaison relative de l'entité (200) par rapport à des caractéristiques physiques prédéterminées dans l'espace de navigation ;
une unité de guidage de navigation (110) configurée pour générer une carte de navigation fournissant des attributs uniques sur la base d'une configuration de navigation identifiée dans l'espace de navigation, et pour mettre à jour dynamiquement un ou plusieurs des attributs uniques de la carte de navigation en tant qu'apprentissage / retour d'information fondé sur des données historiques de navigation, dans lequel l'unité de guidage de navigation (110) est positionnée à l'intérieur de l'entité (200) ou à l'extérieur de l'entité (200) ; et
une unité d'analyse (112) configurée pour sélectionner et utiliser une ou plusieurs des positions relatives et des orientations relatives fournies par l'unité d'estimation de position et d'orientation relatives (108) en tant que pluralité d'entrées, et dans lequel l'unité d'analyse (112) est configurée pour déterminer une position absolue affinée et une orientation absolue affinée de l'entité (200) à ladite fréquence / audit intervalle prédéterminé en affinant la position absolue grossière et l'orientation absolue grossière sur la base :
d'une ou plusieurs desdites entrées sélectionnées fournies par l'unité d'estimation de position et d'orientation relatives (108),
des attributs uniques fournis par l'unité de guidage de navigation (110); dans lequel l'entité (200) comprend un objet stationnaire ou un objet mobile.

2. Le système (102) selon la revendication 1, dans lequel l'unité d'analyse (112) est configurée pour :
transformer le chemin prédéterminé (304) en faisant tourner un plan de navigation (402) associé au chemin prédéterminé (304) d'un angle de rotation de manière à aligner le chemin prédéterminé (304) parallèlement à l'un des axes X ou Y du plan cartésien bidimensionnel et à générer un plan de navigation transformé (404), dans lequel la position absolue grossière subit la même rotation pour devenir une position absolue grossière transformée de l'entité (200) ;
appliquer un affinement à la position absolue grossière transformée sur la base d'une ou plusieurs desdites entrées fournies par l'unité d'estimation de position et d'orientation relatives (108) et obtenir une position absolue affinée transformée de l'entité (200) sur le plan de navigation transformé (404), dans lequel l'affinement consiste en une simple substitution d'une combinaison d'une valeur de coordonnée idéale transformée d'intérêt et d'une ou plusieurs d'une pluralité de déviations par rapport au chemin prédéterminé (304) obtenues parmi la pluralité d'entrées fournies par l'unité d'estimation de position et d'orientation relatives (108) à la valeur X ou Y des coordonnées de la position absolue grossière transformée de l'entité (200), en fonction de la rotation appliquée lors de la transformation du plan de navigation (404), et dans lequel la valeur de coordonnée idéale transformée d'intérêt est égale à l'une des valeurs de coordonnées transformées idéales du point de départ sélectionnée sur la base de la transformation appliquée, et dans lequel la valeur de coordonnée idéale transformée d'intérêt est égale à la valeur de coordonnée X pour un chemin prédéterminé transformé aligné parallèlement à l'axe Y du plan cartésien et inversement, et dans lequel un point de départ idéal correspond aux coordonnées théoriques du nœud de départ dans un segment de ligne obtenues à partir de la carte de navigation ; et
obtenir une position absolue affinée de l'entité (200) en faisant tourner le plan de navigation transformé (404) dans la direction inverse du même angle, lequel est égal à l'angle de rotation, afin de revenir à l'orientation d'origine du plan de navigation (402), et dans lequel la position absolue affinée transformée est tournée du même angle afin de fournir la position absolue affinée de l'entité (200).

3. Le système (102) selon la revendication 1 ou 2, dans lequel l'unité d'analyse (112) est configurée pour :
déterminer l'orientation absolue affinée de l'entité (200) sur la base :
1) de l'orientation relative de l'entité (200) obtenue à partir de l'unité d'estimation de position et d'orientation relatives (108) ; et
2) de l'orientation absolue grossière obtenue à partir de l'unité d'estimation grossière de position et d'orientation absolues (106) ;
dans lequel l'orientation relative de l'entité (200) par rapport au chemin prédéterminé (304), fournie par l'unité d'estimation de position et d'orientation relatives (108), conjointement avec son signe d'orientation, est ajoutée à une orientation du chemin prédéterminé (304) dans le plan de navigation transformé (404) afin d'obtenir l'orientation absolue transformée de l'entité (200) dans le plan de navigation transformé (404) ;
dans lequel l'orientation du chemin prédéterminé (304) dans le plan de navigation transformé (404) est identique à celle de l'axe X ou de l'axe Y du plan cartésien bidimensionnel, en fonction de la transformation appliquée ;
dans lequel, en faisant tourner le plan de navigation (404) dans la direction inverse du même angle que l'angle de rotation afin de revenir à l'orientation d'origine du plan de navigation (402), l'angle d'orientation absolue transformée subit une rotation similaire et fournit une représentation intermédiaire de l'orientation absolue de l'entité (200) ;
dans lequel l'orientation absolue affinée de l'entité (200) est obtenue sous la forme d'une combinaison pondérée de l'orientation absolue grossière et de la représentation intermédiaire de l'orientation absolue de l'entité (200).

4. Le système (102) selon l'une quelconque des revendications précédentes, dans lequel un choix des entrées à utiliser est guidé par la carte de navigation sur la base de la position absolue grossière de l'entité (200).

5. Le système (102) selon l'une quelconque des revendications précédentes, dans lequel l'unité d'analyse (112) est configurée pour sélectionner de manière transparente la position relative et l'orientation relative parmi la pluralité d'entrées fournies par l'unité d'estimation de position et d'orientation relatives (108) lors de la navigation à travers une pluralité de sections mutuellement différentes de la configuration de navigation comprenant soit une pluralité de segments de ligne, soit un seul segment de ligne présentant des attributs physiques mutuellement différents, et dans lequel la sélection par l'unité d'analyse (112) est guidée par la carte de navigation sur la base de la position absolue grossière de l'entité (200), et dans lequel la carte de navigation fournit les attributs physiques associés à chaque segment de ligne, lesdits attributs physiques comprenant un mur adjacent au chemin de navigation ainsi que son côté, ou la présence d'un marquage de voie.

6. Le système (102) selon l'une quelconque des revendications précédentes, dans lequel la première pluralité d'emplacements sur l'entité (200) comprend une extrémité avant et une extrémité arrière de l'entité (200), et dans lequel la seconde pluralité d'emplacements est sélectionnée dans un groupe constitué d'un côté gauche de l'entité (200), d'un côté droit de l'entité (200), d'une extrémité avant de l'entité (200) et d'une extrémité arrière de l'entité (200).

7. Le système (102) selon l'une quelconque des revendications précédentes, dans lequel le second ensemble de capteurs (302A-C) comprend des dispositifs de détection de proximité et des dispositifs de capture d'images, et dans lequel, lors de l'utilisation du second ensemble de capteurs (302A-C), l'unité d'estimation de position et d'orientation relatives (108) fournit la pluralité d'entrées à l'unité d'analyse (112), ladite pluralité d'entrées représentant une position relative et une orientation relative de l'entité (200) par rapport au chemin prédéterminé (304), déterminées sur la base de l'ensemble de données capturées à ladite fréquence / audit intervalle prédéterminé par le second ensemble de capteurs (302A-C), et dans lequel les données capturées représentent soit une déviation relative soit une inclinaison relative de l'entité (200) par rapport à certaines caractéristiques physiques fixes connues dans l'espace de navigation, et dans lequel l'unité d'estimation de position et d'orientation relatives (108) détermine une pluralité de telles positions relatives et orientations relatives sur la base de l'ensemble de données capturées par le second ensemble de capteurs (302A-C).

8. Un procédé de fourniture d'une position absolue affinée ou d'une orientation absolue affinée d'une entité (200) à une fréquence/un intervalle prédéfini afin de faciliter la navigation de l'entité (200) le long d'un chemin prédéterminé dans un espace de navigation, dans lequel l'entité (200) comprend un objet stationnaire ou un objet mobile**,** ledit procédé comprenant les étapes consistant à :
a) initier (502) la navigation de l'entité (200) le long du chemin prédéterminé dans l'espace de navigation ;
b) déterminer (504) une position absolue grossière et une orientation absolue grossière de l'entité (200) sur la base d'un ensemble de données de position capturées par un premier ensemble de capteurs (202A-H) parmi une pluralité de capteurs (104) disposés sur une première pluralité d'emplacements sur l'entité (200) ;
c) déterminer (506) une pluralité de positions relatives et d'orientations relatives de l'entité (200) par rapport à un chemin prédéterminé (304) de l'entité (200) dans l'espace de navigation, sur la base d'un ensemble de données capturées par un second ensemble de capteurs (302A-C) parmi la pluralité de capteurs (104) disposés sur une seconde pluralité d'emplacements sur l'entité (200), et fournir ladite pluralité de positions relatives et d'orientations relatives en tant que pluralité d'entrées à une unité d'analyse (112) ;
d) sélectionner (508), par l'unité d'analyse (112), une position relative et une orientation relative de l'entité (200) par rapport au chemin prédéterminé (304) parmi la pluralité d'entrées, sur la base de la position absolue grossière de l'entité (200) et d'une carte de navigation ;
e) déterminer (510) une position absolue affinée et une orientation absolue affinée de l'entité (200) en affinant respectivement la position absolue grossière et l'orientation absolue grossière sur la base de la position relative sélectionnée et de l'orientation relative sélectionnée, respectivement, ainsi que des attributs uniques fournis par la carte de navigation sur la base d'une configuration de navigation identifiée dans l'espace de navigation, et dans lequel la carte de navigation est générée et mise à jour sur la base de données cartographiques et d'un modèle d'apprentissage automatique fondé sur des données historiques de navigation
f) vérifier (512) si une destination est atteinte ; et
g) effectuer l'une des opérations suivantes :
i) répéter les étapes b) à f) lorsque la destination n'est pas atteinte; et
ii) arrêter (514) la navigation de l'entité (200) lorsque la destination est atteinte.

9. Le procédé selon la revendication 8, comprenant la sélection de la position relative et de l'orientation relative parmi la pluralité d'entrées générées par l'unité d'estimation de position et d'orientation relatives (108), et dans lequel ladite pluralité d'entrées est déterminée par l'unité d'estimation de position et d'orientation relatives (108) à l'aide du second ensemble de capteurs (302A-C) et dans lequel, à l'étape d), le choix d'une entrée spécifique à utiliser par l'unité d'analyse (112) est guidé par la carte de navigation sur la base de la position absolue grossière de l'entité (200).

10. Le procédé selon la revendication 8 ou 9, comprenant l'utilisation transparente de la position relative sélectionnée et de l'orientation relative sélectionnée lors de la navigation à travers différentes sections de la configuration de navigation comprenant une pluralité de segments de ligne ou un seul segment de ligne présentant des attributs physiques mutuellement différents, et dans lequel la carte de navigation fournit les attributs physiques associés à chaque segment de ligne, et dans lequel les attributs physiques sont sélectionnés dans un groupe constitué d'un mur adjacent au chemin de navigation ainsi que son côté, et de la présence d'un marquage de voie.
